(19) **Europäisches Patentamt / European Patent Office / Office européen des brevets**

(11) **EP 1 755 347 B1**

(12) **EUROPEAN PATENT SPECIFICATION**

(45) Date of publication and mention
of the grant of the patent:
**15.07.2015 Bulletin 2015/29**

(51) Int Cl.:
**H04N 13/04** $^{(2006.01)}$

(21) Application number: **06254293.1**

(22) Date of filing: **16.08.2006**

(54) **Colour error correction**

Farbfehlerkorrektur

Correction d'erreurs de couleur

(84) Designated Contracting States:
**DE FR GB**

(30) Priority: **17.08.2005 GB 0516883**

(43) Date of publication of application:
**21.02.2007 Bulletin 2007/08**

(73) Proprietor: **Snell Limited**
**Berkshire RG6 4PB (GB)**

(72) Inventor: **Weston, Martin**
**Petersfield**
**Hampshire GU31 4JF (GB)**

(74) Representative: **Garratt, Peter Douglas et al**
**Mathys & Squire LLP**
**The Shard**
**32 London Bridge Street**
**London SE1 9SG (GB)**

(56) References cited:
**EP-A- 0 565 333      GB-A- 1 267 267**
**GB-A- 1 385 795**

**Description**

FIELD OF THE INVENTION

This invention concerns the correction of errors in video signals arising from defective composite colour processing.

BACKGROUND OF THE INVENTION

The well-known PAL and NTSC composite colour coding systems carry the chrominance of a colour television signal in the upper part of the bandwidth occupied by a luminance signal. The chrominance comprises two colour-difference signals which are transmitted as the amplitude modulated sidebands of two suppressed subcarriers having the same frequency, but in phase quadrature with each other. The correct recovery of the colour difference signals in a composite decoder requires reconstruction of the two orthogonal subcarriers in the correct phase relationship with the modulated chrominance and use of them to demodulate the two colour difference signals.

The recovery of the subcarriers for demodulation in the correct phase is made possible by including a short "burst" of unmodulated subcarrier, having a defined phase relative to the modulated chrominance, at the start of each television line. If the phase is not recovered correctly the demodulated colour difference signals suffer from mutual crosstalk which appears as colour errors in the decoded picture.

As is well-known, the PAL composite colour coding system seeks to reduce the effect of such phase errors by reversing the phase of one of the chrominance subcarriers on alternately-transmitted lines. This phase alternation results in a given phase angle error having an opposite effect on alternate lines. If there are no substantial differences between the chrominance information on sequential lines, the opposing errors can be concealed (at the expense of vertical chrominance resolution) by averaging succeeding lines. This averaging process results in some colour desaturation, but this is a much less disturbing artefact than hue errors.

Another method of dealing with PAL phase errors which avoids desaturation is to sum and difference the modulated chrominance across a line delay to separate out the two components of the modulated chrominance, as in the well-known "delay-PAL" decoder. Then, phase information can be extracted from these components by frequency doubling, removal of the amplitude modulation and frequency halving (using the colour burst to resolve the 180° ambiguity). In this way a subcarrier-frequency signal can be formed which tracks the phase errors; use of this signal to derive the subcarriers for demodulation cancels out the chrominance phase errors.

In so-called "simple-PAL" decoding there is no such recovery of error-corrected subcarrier, or chrominance line averaging, and therefore phase errors cause alternating colour errors in the decoded video. When the picture contains large areas of saturated colour these alternating colour errors appear as moving coloured bars, and these artefacts are known as "Hanover Bars".

Although the simplest source of Hanover Bars is incorrect demodulation phase, errors may also be introduce by misalignment of decoder circuits, e.g. incorrect operation of line averaging circuits; or, "differential phase" errors may be introduced when the high-frequency phase shift of a transmission or processing path depends on the amplitude of a lower-frequency component of the video signal, such as the luminance.

PAL decoders intended to drive display devices almost always include an averaging process to remove Hanover Bars, but decoders at an earlier point in the signal chain (perhaps included in an analogue-to-digital-converter with an output according ITU-R Recommendation 656) may not include averaging, so as to avoid loss of vertical chrominance resolution. Also, complex, adaptive comb-filter decoders may include a "simple" decoding mode which operates when certain picture characteristics (such as horizontal coloured edges) are detected.

For these reasons it quite common for colour video signals containing Hanover bar artefacts to occur in video processing systems. If the output of such a process is not returned to the PAL composite domain it may never be averaged to remove the Hanover bars, and so the artefact will remain to upset subsequent processing and/or degrade the final displayed picture.

Reference is directed to EP 0 565 333 which discloses an arrangement in which the phase of a burst locked oscillator controlling a PAL chrominance decoder is controlled by a processor including means for summing V and U chrominance signal components of picture signal samples provided by the decoder.

The inventor has appreciated that there is a novel method of processing baseband chrominance signals so as to correct for chrominance phase errors in a previous composite process. The method has the advantage of requiring no knowledge of, or access to, the prior composite process.

SUMMARY OF THE INVENTION

The invention is defined by the independent claims. Further advantageous variations are defined by the corresponding dependent claims.

BRIEF DESCRIPTION OF THE DRAWINGS

An example of the invention will now be described with reference to the drawings in which:

Figure 1 shows a phase diagram of two PAL chrominance vectors on consecutive lines.
Figure 2 shows two decoded chrominance signals on consecutive lines in vector form.
Figure 3 shows a composite phase-error correction system according to an embodiment of the invention.
Figure 4 shows an analyser to determine a phase-error.
Figure 5 shows a composite phase-error correction system capable of correcting differential phase errors according to an alternative embodiment of the invention.

DETAILED DESCRIPTION OF THE INVENTION

The invention will now be described with reference to a PAL composite decoder as an exemplary embodiment of the invention.

A PAL composite decoder will convert modulated PAL chrominance into two colour difference signals U and V. These may be output along with a luminance signal, or combined with the luminance signal to form three primary colour component signal R, G and B. These output signals may be presented in analogue or digital form. Examples are the ITU-R Rec. 656 digital component interface and the Y $P_B$ $P_R$ analogue component interface.

In the description which follows the two colour difference signals will be identified conventionally as U and V, so that V represents the colour difference component which is reversed on alternate lines and U represents the colour difference component which is not so reversed. The skilled person will appreciate that different amplitude weightings may be applied to these signal in different interfaces and processes, and that the processes to be described may be applied to digital $C_B$ $C_R$ colour difference signals, or other signals derived from PAL decoded colour difference signals.

A processing device which analyses such decoded signals has the potential to recognise the effect of phase errors in the composite domain from comparison of colour difference signals on consecutive lines. This recognition is complicated by the inherent variability of image data; however, the application of statistical theory enables a useful measure of the most likely phase error to be found.

We would like to determine $p(\phi)$, the probability of a decoding phase error $\phi$, given information about the U and V values in the image. Bayes' theorem provides a relationship between the probability of some hypothesis (in this case $\phi$) and some evidence (in this case values of U and V). The theorem states that the ("posterior") probability of the hypothesis is proportional the "prior" probability of the hypothesis, multiplied by the probability of the evidence, given the hypothesis. (The prior probability is the probability of the hypothesis in the absence of any evidence.) This can be expressed as follows:

$$p(\phi \mid U, V) \propto p(\phi) \cdot p(U, V \mid \phi) \qquad\qquad [1]$$

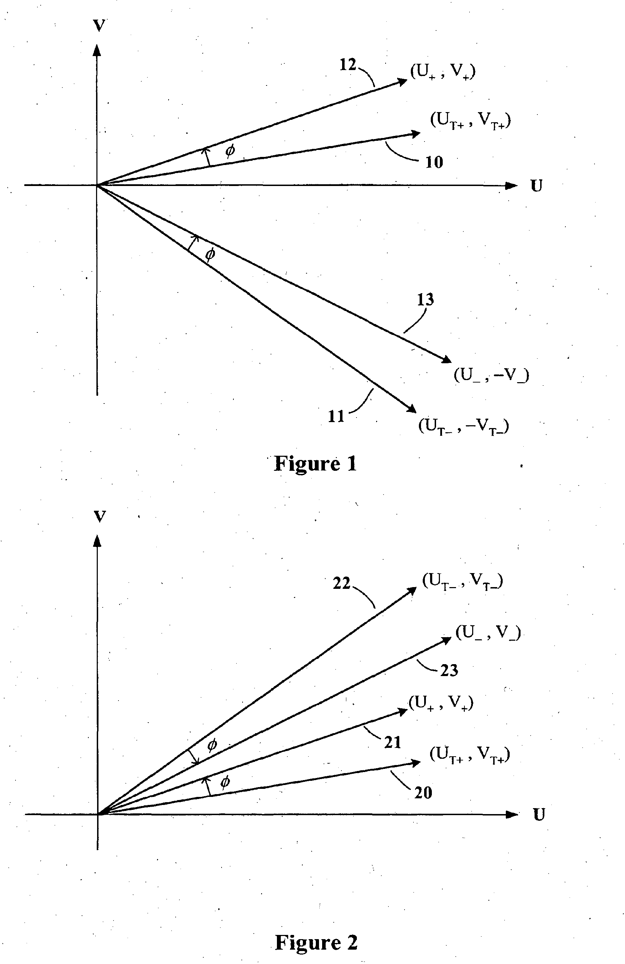

A useful simplification is to consider pairs of U V values from horizontally aligned positions on two consecutively transmitted television lines. Figure 1 shows this on a PAL chrominance vector diagram. A point on a line, on which the V component is not reversed, has a chrominance vector (10) with components $(U_{T+}, V_{T+})$. The subscript + indicates that there is no V-axis phase reversal; and, the subscript T indicates that the vector is 'true', i.e. not in error. The corresponding point on the previous line, which will have its V component reversed, has a chrominance vector (11) with components $(U_{T-}, -V_{T-})$. The subscript — indicates the V-axis phase reversal. If a constant phase error $\phi$ has occurred in the composite domain, perhaps an error in the phase of the reference colour burst: the vector (10) is rotated to become the vector (12), having components $(U_+, V_+)$; and, the vector (11) is rotated to become the vector (13) having components $(U_-, -V_-)$. The lack of the subscript T indicates that these vectors are in error.

The corresponding U and V signals, before and after composite processing are shown, in vector form, in Figure 2. The original signals $U_{T+}$ and $V_{T+}$ (indicated by the vector (20)) appear at the decoder output as signals $U_+$ and $V_+$ (indicated by the vector (21)), and the original signals $U_{T-}$ and $V_{T-}$ (indicated by the vector (22)) appear at the decoder output as signals $U_-$ and $V_-$ (indicated by the vector (23)). As can be seen, removal of the V-axis alternation by the decoder has reversed the effect of the phase error $\phi$ from one line to the next.

Returning to expression [1] the, simplified, problem may be re-stated as:

$$p(\phi \mid U_+, V_+, U_-, V_-) \propto p(\phi) \cdot p(U_+, V_+, U_-, V_- \mid \phi) \qquad [2]$$

Let us consider the right-hand side of this expression. Firstly, it seems reasonable to assume that the most probable phase error is zero and that the distribution of phase errors is Gaussian. The prior probability $p(\phi)$ is thus given as follows:

$$p(\phi) = \exp(-\phi^2 / 2.\sigma_\phi^2) \qquad [3]$$

Where $\sigma_\phi$ is the standard deviation of $\phi$.

Secondly, we can make use of the relationships shown in Figure 2 to obtain a more useful expression for $p(U_+, V_+, U_-, V_- \mid \phi)$. The figure shows that $U_+, V_+, U_-, V_-$ are related to $U_{T+}, V_{T+}, U_{T-}, V_{T-}$ and $\phi$ by the well-known rotational transformation:

$$U_{T+} = U_+ \cdot \cos(\phi) + V_+ \cdot \sin(\phi) \qquad\qquad V_{T+} = V_+ \cdot \cos(\phi) - U_+ \cdot \sin(\phi) \qquad [4a]$$

$$U_{T-} = U_- \cdot \cos(\phi) + V_- \cdot \sin(\phi) \qquad\qquad V_{T-} = V_- \cdot \cos(\phi) + U_- \cdot \sin(\phi) \qquad [4b]$$

Given this known relationship we can say:

$$p(U_+, V_+, U_-, V_- \mid \phi) = p(U_{T+}, V_{T+}, U_{T-}, V_{T-}) \qquad [5]$$

It is also reasonable to assume that the U differences and V differences between horizontally-aligned points on successively transmitted lines will have a Gaussian probability distribution with the most likely difference being zero. Assuming that the U difference is independent of the V difference:

$$p(U_{T+}, V_{T+}, U_{T-}, V_{T-}) = \exp(-(U_{T+} - U_{T-})^2 / 2.\sigma_{UV}^2).\exp(-(V_{T+} - V_{T-})^2 / 2.\sigma_{UV}^2) \qquad [6]$$

Where $\sigma_{UV}$ is the standard deviations of the U and V differences.

Therefore:

$$p(U_{T+}, V_{T+}, U_{T-}, V_{T-}) = \exp\{-((U_T - U_{T-})^2 / 2.\sigma_{UV}^2) - ((V_{T+} - V_{T-})^2 / 2.\sigma_{UV}^2)\} \qquad [7]$$

Substituting from [5] into the left-hand side, and from [4a] and [4b] into the right-hand side, we obtain:

$$p(U_+, V_+, U_-, V_- \mid \phi) =$$

$$\exp\{[-((U_+ - U_-)\cos\phi + (V_+ + V_-)\sin\phi)^2 - ((V_+ - V_-)\cos\phi - (U_+ + U_-)\sin\phi)^2] / 2.\sigma_{UV}^2\} \quad [8]$$

Taking logs and rearranging gives:

$$lp(U_+, V_+, U_-, V_- \mid \phi) = \{-[-2.(U_+.U_- + V_+.V_-).\cos(2\phi) + 2.(U_+.V_- - V_+.U_-).\sin(2\phi)$$
$$+ U_+^2 + U_-^2 + V_+^2 + V_-^2] / 2.\sigma_{UV}^2\} \quad [9]$$

Where $lp(x)$ indicates log probability.

In an area of picture, there will be a number of values of $U_+, V_+, U_-, V_-$. If we call the totality of these values $(U, V)$, then $p(UV)$ will be the product of the individual probabilities $p(U_+, V_+, U_-, V_-)$; and therefore:

$$Ip(U,V \mid \phi) = \Sigma\, Ip(U_+,V_+,U_-,V_-) \qquad\qquad [10]$$

Substituting into [9]:

$$Ip(U,V \mid \phi) = -\Sigma\{ (-2.(U_+.U_- + V_+.V_-).\cos(2\phi) + 2.(U_+.V_- - V_+.U_-).\sin(2\phi)$$
$$+ U_+^2 + U_-^2 + V_+^2 + V_-^2) / 2.\sigma_{UV}^2\} \;[11]$$

But, from [1]:

$$Ip(\phi \mid U, V) \propto Ip(\phi) + Ip(U, V \mid \phi) \qquad\qquad [12]$$

And, from [3]:

$$Ip(\phi) = -\phi^2/2.\sigma_\phi^2 \qquad\qquad [13]$$

Substituting [12] and [13] into [11]:

$$Ip(\phi \mid U, V) \propto$$
$$-\phi^2/2.\sigma_\phi^2 - \Sigma[(-2.(U_+.U_- + V_+.V_-).\cos(2\phi) + 2.(U_+.V_- - V_+.U_-).\sin(2\phi)$$
$$+ U_+^2 + U_-^2 + V_+^2 + V_-^2) / 2.\sigma_{UV}^2] \;[14]$$

The most probable value of $\phi$ can be found by differentiating with respect to $\phi$ :

$$\partial(Ip(\phi \mid U, V)) / \partial(\phi) =$$
$$-\phi/\sigma_\phi^2 - 2.\Sigma[-(U_+.U_- + V_+.V_-).\sin(2\phi) + (U_+.V_- - V_+.U_-).\cos(2\phi)] / \sigma_{UV}^2 \qquad [15]$$

Setting this derivative to zero, to find the maximum probable value, gives:

$$\tan(2\phi) = -\Sigma(U_+.V_- - V_+.U_-) / [\Sigma(U_+.U_- + V_+.V_-) + \sigma_{UV}^2.\phi / 2.\sin(2\phi).\sigma_\phi^2] \quad [16]$$

It is therefore possible to form a highly-probable estimate of coding phase error by taking a set of pairs of vertically-aligned points on consecutive lines and using the relevant U and V values to evaluate the right-hand side of equation [16]. There is no need to obtain accurate values for the standard deviations $\sigma_{UV}$ and $\sigma_\phi$. The term $(\sigma_{UV}^2.\phi/2.\sin(2\phi).\sigma_\phi^2)$ is normally so small that it is unimportant. It can merely be set to a small constant value, such as one least-significant bit in a digital implementation, so as to avoid the division by zero that would otherwise occur in the unlikely case of zero values of U and V.

The choice of the area of picture over which the summation takes place will depend on the acceptable delay in obtaining the value of the phase error; and, on the risk of too few line-to-line chrominance differences being analysed to meet the assumption of Gaussian distribution of these values. In many applications it will be convenient to evaluate over one complete field.

Having obtained the phase error $\phi$ it can be used to correct the U and V values by applying the transformation of equations [4a] and [4b]; or, if there is access to the composite decoder, the error can be fed back to correct its demodulation phase.

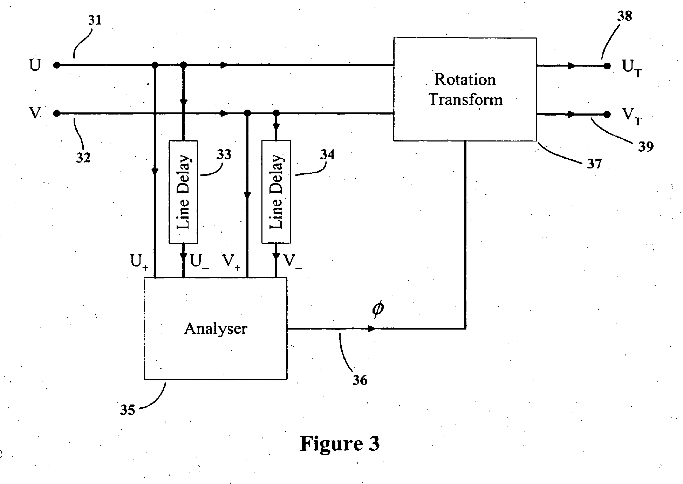

An example of a phase-error corrector is shown in Figure 3, to which reference is now made. Colour difference signals or data U (31) and V (32) from a video signal are input to respective one-line delays (33) and (34) to provide U and V signals or data corresponding to the equivalent, horizontally-aligned point on the previous line. When the inputs (31) (32) correspond to a line on which the V-axis phase is not reversed, the undelayed signals will be $U_+$ and $V_+$ and the delayed signals will be $U_-$ and $V_-$. It should be noted that this will only be the case on alternate lines and, as will become clear, the analyser (35), described below, only takes input on alternate lines.

These signal values are input to an analyser (35), which calculates the phase error $\phi$ from a number of sets of $U_+ V_+ U_- V_-$ values according to the principles explained above. At first it would appear that it is necessary for the analyser (35) to be able to identify the condition when the inputs (31) and (32) correspond to a line where the V-axis is not reversed; however, this is not necessary in the system shown in Figure 3, and, in practice, an arbitrarily-phased, half-line-frequency signal can be used. If the wrong V-axis phase is used, the polarity of the recovered phase error will be inverted; however as can be seen from Figure 2, the direction of the errors alternates from line to line, and therefore a correction device using the recovered phase error (as will be described below) will operate correctly so long as it uses the same assumed V-axis phase as the analyser.

If the value of $\phi$ is to be passed to another, independent process, perhaps as metadata associated with the video, it should preferably be associated with an assumed V-axis phase. However, in any correction process it is always possible to detect the use of incorrect phase because the process will worsen Hanover bar artefacts when incorrect phase is used, and therefore information about the assumed V-axis phase is not essential to the use of the value of $\phi$.

The calculated phase error $\phi$ (36) is input to rotational transform block (37), which applies equation [4a] to obtain corrected values $U_{T+} V_{T+}$ from $U_+ V_+$ and $\phi$; and, applies equation [4b] to obtain corrected values $U_{T-} V_{T-}$ from $U_- V_-$ and $\phi$. The corrected values $U_T$ (38) and $V_T$ (39) are output.

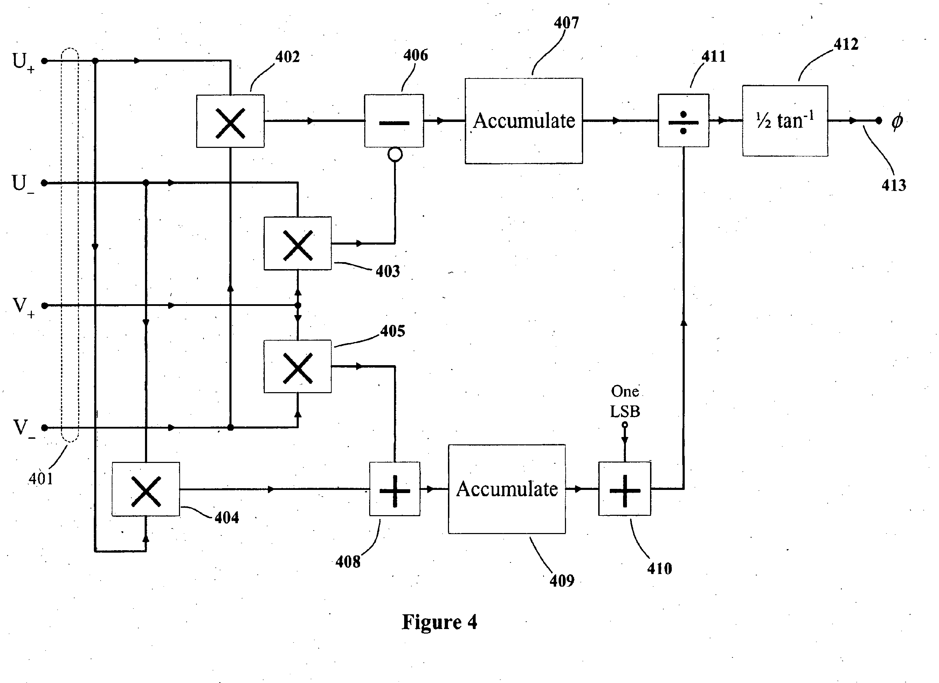

The operation of the analyser block (35) is shown in Figure 4. The block receives input $U_+ U_- V_+ V_-$ signals (401). These signals can be obtained by taking delayed and undelayed U V signals on a line on which the V-axis phase is not inverted, as shown in Figure 3. Preferably the inputs are in sampled form; as the intention is to recover a constant phase error, the horizontal sampling frequency can be much less than that required to reproduce the picture.

However any vertical sub-sampling should not unduly distort the line-to line-differences, which contain the information about the phase error. For example a selection of pairs of consecutive lines from different parts of picture could be used. Or, information from lines having the same V-axis phase could be combined to give a representative non-inverted V-axis line and a corresponding representative inverted V-axis line.

The inputs (401) are applied to four two-input multipliers corresponding to the U.V product terms of equation [16].
The multiplier (402) creates $U_+.V_-$
The multiplier (403) creates $V_+.U_-$
The multiplier (404) creates $U_+.U_-$
The multiplier (405) creates $V_+.V_-$

The subtractor (406) coupled to an accumulator (407) forms the numerator of the fraction on the right-hand side of equation [16]. The accumulator (407) performs summation of the output of the subtractor (406) over an area of the picture. Usually it will be convenient to sum the results over a complete field; also, it will usually be necessary to ignore some U V values at the top and bottom of the picture, where either $U_+V_+$ or $U_-V_-$ fall outside the active picture area.

The adder (408) and accumulator (409) form the $\Sigma(U_+.U_- + V_+.V_-)$ term on the right-hand side of equation [16]. The adder (410) adds the small convenient constant, such as one least-significant bit in a digital process, corresponding to the term $(\sigma_{UV}^2.\phi/2.\sin(2\phi).\sigma_\phi^2)$. The accumulator (409) sums over exactly the same set of U V samples as the accumulator (407).

At the end of each accumulation, for example at the end of a field, the divider (411) evaluates the right hand side of equation [16] and passes the result to the inverse tangent block (412) which determines $\phi$, according to equation [16], for output (413).

As $\phi$ is usually small it may be convenient to use an approximation to the inverse tangent function, and further simplification may be possible because the correction process only requires values of $\sin\phi$ and $\cos\phi$.

So far, it has been assumed that the phase error is constant. However, a well-known distortion of composite television signals is differential phase distortion in which the chrominance phase is distorted in dependence upon the luminance value. The method of the invention can also be used to measure and correct differential phase errors.

Assume that the phase error $\phi$ is a linear function of the luminance Y:

$$\phi = \phi_0 + \phi_1 . Y \qquad\qquad [17]$$

Where $\phi_0$ is the phase error at black, and $\phi_1$ is a parameter quantifying the amount of differential phase distortion.

If $\phi_0$ and $\phi_1$ have Gaussian probability distributions and are independent of each other:

$$p(\phi_0 , \phi_1) = \exp(-(\phi_0 / 2.\sigma_0^2) - (\phi_1 / 2.\sigma_1^2)) \qquad\qquad [18]$$

Using equations [17] and [18] it is possible to modify equation [14] to give an expression for $Ip(\phi_0, \phi_1 | U, V)$. The partial derivatives of this expression with respect to $\phi_0$ and $\phi_1$ can each be set to zero to give a pair of simultaneous equations as follows (assuming that the phase errors are small):

$$\Sigma((U_+.V_- - V_+.U_-) = \phi_0.\{\sigma_{UV}^2 /2.\sigma_\phi^2 + \Sigma(U_+.U_- + V_+.V_-)\}$$
$$+ \phi_1.\{\Sigma Y.(U_+.U_- + V_+.V_-)\} \qquad [19]$$

and:

$$\Sigma(Y.(U_+.V_- - V_+.U_-) = \phi_0.\{Y.\Sigma(U_+.U_- + V_+.V_-)\}$$
$$+ \phi_1.\{\sigma_{UV}^2 /2.\sigma_\phi^2 + \Sigma Y^2.(U_+.U_- + V_+.V_-)\} \qquad [20]$$

These simultaneous equations can be solved by an analyser similar to the analyser shown in Figure 4, but also having access to luminance data. An associated luminance value (Y) is required for each set of chrominance values $U_+$ $V_+$ $U_-$ $V_-$. This value could be obtained by taking the value corresponding to one of the two lines used for chrominance processing; or, the value could be an average of the luminance values on each of these lines. The term $\sigma_{UV}^2 /2.\sigma_\phi^2$ can be set to a small constant value, or ignored.

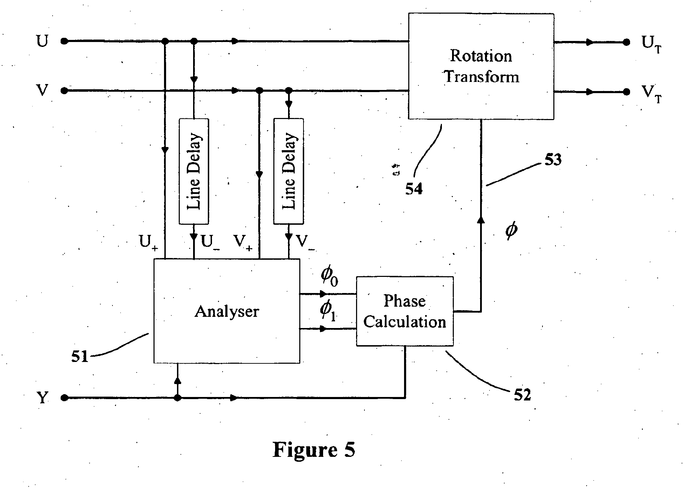

The phase error correction system of Figure 3 can be extended to correct differential phase errors as shown in Figure 5. The analyser block (51) uses input Y $U_+$ $V_+$ $U_-$ $V_-$ values to solve the simultaneous equations [19] and [20]. The relevant summations are evaluated over a convenient set of values, such as a whole field or frame. The standard deviation terms can be approximated as described previously.

For each summation a pair values $\phi_0$ and $\phi_1$ is output to a calculation block (52), which uses the relationship of equation [17] to calculate a value of $\phi$ for each input Y value. Unlike the block (51), which only has to provide an output at the end of each accumulation, the block (52) must output a new value of $\phi$ (53) at the same rate as luminance values Y are received. The Y values need not necessary be processed at the full luminance horizontal resolution, but if the resolution is significantly less than the corresponding chrominance resolution phase errors will not be corrected properly in areas of horizontal detail.

The block (54) corrects the phase errors in the same way as the block (37) of Figure 3. As the phase error correction signal $\phi$ (53) depends on the luminance values, it will be necessary to ensure that it is correctly timed with respect to the U and V signal inputs to the correction block (53), this may require that compensating delays are inserted at appropriate points in the system.

The invention has been described by way of examples and other embodiments will be apparent to the ordinarily-skilled reader of the above description. For example the description has been in terms of signals, but the invention is equally applicable to video data files; and the processes may not necessarily be carried out in real time. The signals may be converted to and from digital form at any convenient point in the process described. Appropriate sub-sampling of the UV or YUV data can reduce the number of values which have to be input to the described summation processes.

In addition, although the invention has been described with reference to a PAL decoder, it is not limited thereto.

Although the invention has been described as making use of information from successively transmitted lines, it may equally be applied to information from nearby positions in other fields or frames, where similar picture information having opposing V-axis phases can be found - this may be particularly appropriate for processing still, or slowly moving video information. It is advantageous to use colour difference information that is most closely vertically and/or temporally adjacent.

**Claims**

1. A method of correcting colour errors in a decoded video signal or data derived from a coding method using periodic phase reversal of a colour difference signal, wherein colour difference values from reversed and un-reversed parts of an image are used to determine a measure of chrominance vector phase rotation error **characterised in that**:

   the chrominance vector phase rotation error is determined by evaluating the equation:

$$\tan(2\phi) = -\Sigma(U_+.V_- - V_+.U_-) / [\Sigma(U_+.U_- + V_+.V_-) + C]$$

Where:

$\phi$ is the phase rotation error;
$U_+$ $V_+$ are chrominance values at a phase un-reversed point;
U- V- are chrominance values at a phase reversed point; and,
C is a constant.

2. A method of correcting colour errors in a decoded video signal or data derived from a coding method using periodic phase reversal of a colour difference signal, wherein colour difference values from reversed and un-reversed parts of an image are used to determine a measure of chrominance vector phase rotation error **characterised in that**:

the chrominance vector phase rotation error is determined by evaluating the equation:

$$\tan(2\phi) = -\Sigma(U_+.V_- - V_+.U_-) / [\Sigma(U_+.U_- + V_+.V_-) + \sigma_{UV}^2.\phi \;/\; 2.\sin(2\phi).\sigma_\phi^2]$$

Where:

$\phi$ is the phase rotation error;
$U_+$ $V_+$ are chrominance values at a phase un-reversed point;
U- V- are chrominance values at a phase reversed point;
$\sigma_{UV}$ is the standard deviation of U differences and V differences between pairs of vertically aligned, phase-reversed and phase un-reversed points;
$\sigma_\phi$ is the standard deviation of $\phi$.

3. The method according to Claim 1 or Claim 2 wherein colour errors in said video signal or data are corrected by applying a rotational transform to said video signal or data according to the said error signal.

4. The method according to any preceding claim in which a luminance value associated with each said set of colour difference values is used in determining the error signal representing a chrominance vector phase rotation.

5. Apparatus for correcting colour errors in a video signal or data derived from a coding method using periodic phase reversal of a colour difference signal, comprising analyser means (25) for determining a measure of chrominance vector phase rotation error using colour difference values from reversed and un-reversed parts of the image, **characterised in that**:

the chrominance vector phase rotation error is determined by evaluating the equation:

$$\tan(2\phi) = -\Sigma(U_+.V_- - V_+.U_-) / [\Sigma(U_+.U_- + V_+.V_-) + C]$$

Where:

$\phi$ is the phase rotation error;
$U_+$ $V_+$ are chrominance values at a phase un-reversed point;
U- V- are chrominance values at a phase reversed point; and,
C is a constant.

6. Apparatus for correcting colour errors in a video signal or data derived from a coding method using periodic phase reversal of a colour difference signal, comprising analyser means (25) for determining a measure of chrominance vector phase rotation error using colour difference values from reversed and un-reversed parts of the image, **characterised in that**:

the chrominance vector phase rotation error is determined by evaluating the equation:

$$\tan(2\phi) = -\Sigma(U_+.V_- - V_+.U_-) / [\Sigma(U_+.U_- + V_+.V_-) + \sigma_{UV}{}^2.\phi / 2.\sin(2\phi).\sigma_\phi{}^2]$$

Where:

$\phi$ is the phase rotation error;
$U_+ V_+$ are chrominance values at a phase un-reversed point;
$U_- V_-$ are chrominance values at a phase reversed point;
$\sigma_{UV}$ is the standard deviation of U differences and V differences between pairs of vertically aligned, phase-reversed and phase un-reversed points;
$\sigma_\phi$ is the standard deviation of $\phi$.

7. The apparatus according to Claim 5 or Claim 6 wherein colour errors in said video signal or data are corrected by applying a rotational transform to said video signal or data according to the said error signal.

8. The apparatus according to any of Claims 5 to 7 in which a luminance value associated with each said set of colour difference values is used in determining the error signal representing a chrominance vector phase rotation.

**Patentansprüche**

1. Verfahren zum Korrigieren von Farbfehlern in decodierten Videosignalen oder -daten, die von einem Codierungsverfahren mittels periodischer Phasenumkehr eines Farbdifferenzsignals abgeleitet werden, wobei Farbdifferenzwerte von umgekehrten und nicht umgekehrten Teilen eines Bildes zum Ermitteln eines Maßes für einen Chrominanzvektor-Phasenrotationsfehler benutzt werden, **dadurch gekennzeichnet, dass**:

der Chrominanzvektor-Phasenrotationsfehler durch Beurteilen der folgenden Gleichung ermittelt wird:

$$\tan(2\phi) = -\Sigma(U_+.V_- - V_+.U_-) / [\Sigma(U_+.U_- + V_+.V_-) + C]$$

wobei:

$\phi$ der Phasenrotationsfehler ist;
$U_+ V_+$ Chrominanzwerte an einem Punkt mit nicht umgekehrter Phasenlage sind;
U- V- Chrominanzwerte an einem Punkt mit umgekehrter Phasenlage sind; und
C eine Konstante ist.

2. Verfahren zum Korrigieren von Farbfehlern in decodierten Videosignalen oder -daten, die von einem Codierungsverfahren mittels periodischer Phasenumkehr eines Farbdifferenzsignals abgeleitet sind, wobei Farbdifferenzwerte von umgekehrten und nicht umgekehrten Teilen eines Bildes zum Ermitteln eines Maßes für einen Chrominanzvektor-Phasenrotationsfehler benutzt werden, **dadurch gekennzeichnet, dass**:

der Chrominanzvektor-Phasenrotationsfehler durch Beurteilen der folgenden Gleichung ermittelt wird:

$$\tan(2\phi) = -\Sigma(U_+.V_- - V_+.U_-) / [\Sigma(U_+.U_- + V_+.V_-) + \sigma_{UV}{}^2.\phi / 2.\sin(2\phi).\sigma_\phi{}^2]$$

wobei:

$\phi$ der Phasenrotationsfehler ist;
$U_+ V_+$ Chrominanzwerte an einem Punkt mit nicht umgekehrter Phasenlage sind;

U- V- Chrominanzwerte an einem Punkt mit umgekehrter Phasenlage sind;
$\sigma_{UV}$ die Standardabweichung von U Differenzen und V Differenzen zwischen Paaren von vertikal ausgerichteten Punkten mit umgekehrter Phasenlage und nicht umgekehrter Phasenlage sind;
$\sigma_\phi$ die Standardabweichung von $\phi$ ist.

3. Verfahren nach Anspruch 1 oder Anspruch 2, wobei Farbfehler in den genannten Videosignalen oder -daten durch Anwenden einer Drehtransformation auf die genannten Videosignale oder -daten gemäß dem genannten Fehlersignal korrigiert werden.

4. Verfahren nach einem vorherigen Anspruch, wobei ein mit jedem genannten Satz von Farbdifferenzwerten assoziierter Luminanzwert beim Ermitteln des eine Chrominanzvektor-Phasenrotation repräsentierenden Fehlersignals benutzt wird.

5. Vorrichtung zum Korrigieren von Farbfehlern in Videosignalen oder -daten, die von einem Codierungsverfahren mittels periodischer Phasenumkehr eines Farbdifferenzsignals abgeleitet sind, die ein Analysemittel (25) zum Ermitteln eines Maßes für einen Chrominanzvektor-Phasenrotationsfehler anhand von Farbdifferenzwerten von umgekehrten und nicht umgekehrten Teilen des Bildes umfasst, **dadurch gekennzeichnet, dass**:

der Chrominanzvektor-Phasenrotationsfehler durch Beurteilen der folgenden Gleichung ermittelt wird:

$$\tan(2\phi) = -\Sigma(U_+.V_- - V_+.U_-)/[\Sigma(U_+.U_- + V_+.V_-) + C]$$

wobei:

$\phi$ der Phasenrotationsfehler ist;
$U_+$ $V_+$ Chrominanzwerte an einem Punkt mit nicht umgekehrter Phasenlage sind;
U- V- Chrominanzwerte an einem Punkt mit umgekehrter Phasenlage sind; und
C eine Konstante ist.

6. Vorrichtung zum Korrigieren von Farbfehlern in Videosignalen oder -daten, die von einem Codierungsverfahren mittels periodischer Phasenumkehr eines Farbdifferenzsignals abgleitet sind, die ein Analysemittel (25) zum Ermitteln eines Maßes für einen Chrominanzvektor-Phasenrotationsfehler anhand von Farbdifferenzwerten von umgekehrten und nicht umgekehrten Teilen des Bildes umfasst, **dadurch gekennzeichnet, dass**:

der Chrominanzvektor-Phasenrotationsfehler durch Beurteilen der folgenden Gleichung ermittelt wird:

$$\tan(2\phi) = -\Sigma(U_+.V_- - V_+.U_-)/[\Sigma(U_+.U_- + V_+.V_-) + \sigma_{UV}^2.\phi / 2.\sin(2\phi).\sigma_\phi^2]$$

wobei:

$\phi$ der Phasenrotationsfehler ist;
$U_+$ $V_+$ Chrominanzwerte an einem Punkt mit nicht umgekehrter Phasenlage sind;
U- V- Chrominanzwerte an einem Punkt mit umgekehrter Phasenlage sind;
$\sigma_{UV}$ die Standardabweichung von U Differenzen und V Differenzen zwischen Paaren von vertikal ausgerichteten Punkten mit umgekehrter Phasenlage und mit nicht umgekehrter Phasenlage sind;
$\sigma_\phi$ die Standardabweichung von $\phi$ ist.

7. Vorrichtung nach Anspruch 5 oder Anspruch 6, wobei Farbfehler in den Videosignalen oder -daten durch Anwenden einer Drehtransformation auf die genannten Videosignale und -daten gemäß dem genannten Fehlersignal korrigiert werden.

8. Vorrichtung nach einem der Ansprüche 5 bis 7, bei dem ein mit jedem genannten Satz von Farbdifferenzwerten assoziierter Luminanzwert beim Ermitteln des eine Chrominanzvektor-Phasenrotation repräsentierenden Fehlersignals benutzt wird.

**Revendications**

1. Procédé de correction d'erreurs de couleur dans un signal vidéo décodé ou des données décodées provenant d'un procédé de codage au moyen de l'inversion de phase périodique d'un signal de différence de couleur, dans lequel des valeurs de différence de couleur en provenance de parties inversées et non inversées d'une image sont utilisées pour déterminer une mesure de l'erreur de rotation de phase de vecteur de chrominance, **caractérisé en ce que** :

l'erreur de rotation de phase de vecteur de chrominance est déterminée par l'évaluation de l'équation:

$$\tan(2\phi) = -\Sigma(U_+.V_- - V_+.U_-)/[\Sigma(U_+.U_- + V_+.V_-) + C]$$

où :

$\phi$ est l'erreur de rotation de phase ;
$U_+$ $V_+$ sont des valeurs de chrominance au niveau d'un point de phase non inversée ;
U- V- sont des valeurs de chrominance au niveau d'un point de phase inversée ; et,
C est une constante.

2. Procédé de correction d'erreurs de couleur dans un signal vidéo décodé ou des données décodées provenant d'un procédé de codage au moyen de l'inversion de phase périodique d'un signal de différence de couleur, dans lequel des valeurs de différence de couleur en provenance de parties inversées et non inversées d'une image sont utilisées pour déterminer une mesure de l'erreur de rotation de phase de vecteur de chrominance, **caractérisé en ce que** :

l'erreur de rotation de phase de vecteur de chrominance est déterminée par l'évaluation de l'équation:

$$\tan(2\phi) = -\Sigma(U_+.V_- - V_+.U_-)/[\Sigma(U_+.U_- + V_+.V_-) + \sigma uv^2.\phi/2.\sin(2\phi).\sigma_\phi^2]$$

où :

$\phi$ est l'erreur de rotation de phase ;
$U_+$ $V_+$ sont des valeurs de chrominance au niveau d'un point de phase non inversée ;
U- V- sont des valeurs de chrominance au niveau d'un point de phase inversée ;
$\sigma uv$ est l'écart-type des différences U et des différences V entre des paires de points de phase inversée et de phase non inversée alignés à la verticale ;
$\sigma_\phi$ est l'écart-type de $\phi$.

3. Procédé selon la revendication 1 ou la revendication 2, dans lequel les erreurs de couleur dans ledit signal vidéo ou lesdites données sont corrigées par l'application d'une transformation rotationnelle sur ledit signal vidéo ou lesdites données en fonction dudit signal d'erreur.

4. Procédé selon l'une quelconque des revendications précédentes, dans lequel une valeur de luminance associée à chaque dit ensemble de valeurs de différence de couleur est utilisée pour déterminer le signal d'erreur représentant une rotation de phase de vecteur de chrominance.

5. Appareil de correction d'erreurs de couleur dans un signal vidéo ou des données provenant d'un procédé de codage au moyen de l'inversion de phase périodique d'un signal de différence de couleur, comportant un moyen analyseur (25) permettant de déterminer une mesure de l'erreur de rotation de phase de vecteur de chrominance au moyen des valeurs de différence de couleur en provenance de parties inversées et non inversées de l'image, **caractérisé en ce que** :

l'erreur de rotation de phase de vecteur de chrominance est déterminée par l'évaluation de l'équation :

$$\tan(2\phi) = -\Sigma(U_+.V_- - V_+.U_-)/[\Sigma(U_+.U_- + V_+.V_-) + C]$$

où :

$\phi$ est l'erreur de rotation de phase ;
$U_+$ $V_+$ sont des valeurs de chrominance au niveau d'un point de phase non inversée ;
U- V- sont des valeurs de chrominance au niveau d'un point de phase inversée ; et,
C est une constante.

6. Appareil de correction d'erreurs de couleur dans un signal vidéo ou des données provenant d'un procédé de codage au moyen de l'inversion de phase périodique d'un signal de différence de couleur, comportant un moyen analyseur (25) permettant de déterminer une mesure de l'erreur de rotation de phase de vecteur de chrominance au moyen des valeurs de différence de couleur en provenance de parties inversées et non inversées de l'image, **caractérisé en ce que** :

l'erreur de rotation de phase de vecteur de chrominance est déterminée par l'évaluation de l'équation:

$$\tan(2\phi) = -\Sigma(U_+.V_- - V_+.U_-)/[\Sigma(U_+.U_- + V_+.V_-) + \sigma uv^2.\phi/2.\sin(2\phi).\sigma_\phi^2]$$

où :

$\phi$ est l'erreur de rotation de phase ;
$U_+$ $V_+$ sont des valeurs de chrominance au niveau d'un point de phase non inversée ;
U- V- sont des valeurs de chrominance au niveau d'un point de phase inversée ;
$\sigma uv$ est l'écart-type des différences U et des différences V entre des paires de points de phase inversée et de phase non inversée alignés à la verticale ;
$\sigma_\phi$ est l'écart-type de $\phi$.

7. Appareil selon la revendication 5 ou la revendication 6, dans lequel les erreurs de couleur dans ledit signal vidéo ou lesdites données sont corrigées par l'application d'une transformation rotationnelle sur ledit signal vidéo ou lesdites données en fonction dudit signal d'erreur.

8. Appareil selon l'une quelconque des revendications 5 à 7, dans lequel une valeur de luminance associée à chaque dit ensemble de valeurs de différence de couleur est utilisée pour déterminer le signal d'erreur représentant une rotation de phase de vecteur de chrominance.

**Figure 1**

**Figure 2**

U     31

V     32

33  Line Delay

34  Line Delay

$U_+$  $U_-$  $V_+$  $V_-$

Analyser     35

$\phi$     36

Rotation
Transform     37     38     $U_T$

$V_T$     39

**Figure 3**

Figure 4

**Figure 5**

**EP 1 755 347 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0565333 A